# EUROPEAN PATENT SPECIFICATION

(11) **EP 4 492 518 B1**
(45) Date of publication and mention of the grant of the patent: **21.10.2026**
(21) Application number: 24187828.9
(22) Date of filing: 10.07.2024
(51) Int. Cl.: H01M 10/04, H01M 10/0525, H01M 10/0587, H01M 50/124, H01M 50/186, H01M 50/197, H01M 50/198, H01M 50/105, H01M 50/474, H01M 50/486

(54) **BATTERY CELL AND ELECTRIC DEVICE**
BATTERIEZELLE UND ELEKTRISCHE VORRICHTUNG
ÉLÉMENT DE BATTERIE ET DISPOSITIF ÉLECTRIQUE

(30) Priority: 10.07.2023 CN 202310835189
(43) Date of publication of application: 15.01.2025
(73) Proprietor: Ningde Amperex Technology Ltd., Ningde City, Fujian 352100 (CN)
(72) Inventor: LI, Chenchen, 352100 Ningde City, Fujian Province (CN)
(74) Representative: Icosa

(56) References cited:
- CN-A- 113 097 571
- US-A1- 2015 104 684
- US-A1- 2017 141 427

## Description

### TECHNICAL FIELD

This application relates to the field of battery technologies, and specifically, to a battery cell and an electric device.

### BACKGROUND

Battery cells have been widely used in fields such as portable electronic devices, electric transportation tools, electric tools, drones, and energy storage devices. During manufacturing of battery cells, the reliability of battery cells is a non-negligible issue. Therefore, how the reliability of battery cells is improved is an urgent technical problem to be resolved in battery cell technologies. CN 113 097 571 A discloses an electrochemical device.

### SUMMARY

This application provides a battery cell and an electric device, where the reliability of such battery cell is effectively improved.

This application is implemented using the following technical solutions.

A battery cell according to claim 1 is provided. Advantageous embodiments are defined by the dependent claims.

Additional aspects and advantages of this application will be given in part in the following description, part of which will become apparent from the following description or be learned from the practice of this application.

### BRIEF DESCRIPTION OF DRAWINGS

To describe the technical solutions in some embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic diagram of an electrode assembly according to a first embodiment of this application;
FIG. 2 is a schematic diagram of a first adhesive layer provided on a negative electrode terminating section according to a second embodiment of this application;
FIG. 3 is a schematic diagram of an insulating layer body and a second adhesive layer provided on a negative electrode terminating section according to a third embodiment of this application; and
FIG. 4 is a cross-sectional view along A-A direction in FIG. 3.

Reference signs: electrode assembly 100;
positive electrode plate 110; positive electrode starting section 111; first straight section 111a; first bent section 111b; second straight section 111c; positive electrode middle section 112; positive electrode terminating section 113;
negative electrode plate 120; negative electrode starting section 121; third straight section 121a; second bent section 121b; fourth straight section 121c; negative electrode middle section 122; negative electrode terminating section 123;
insulating layer 130; first adhesive layer 131; insulating layer body 132; second adhesive layer 133;
negative electrode current collector 101; negative electrode active substance 102; and thickness direction X of electrode assembly.

### DESCRIPTION OF EMBODIMENTS

To make the objectives, technical solutions, and advantages in some embodiments of this application clearer, the following clearly and completely describes the technical solutions in some embodiments of this application with reference to the accompanying drawings in some embodiments of this application. Apparently, the described embodiments are some but not all embodiments of this application. It should be noted and understood that there can be improvements and modifications made of the present invention described in detail below without departing from the scope of the invention as set forth in the accompanying claims.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In this application, "a plurality of" means more than two (inclusive). Similarly, "a plurality of groups" means more than two (inclusive) groups, and "a plurality of pieces" means more than two (inclusive) pieces.

It should be noted that similar reference numerals and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application in use, or orientations or positional relationships as conventionally understood by persons skilled in the art, and the orientations or positional relationships as indicated are merely for ease and brevity of description of this application rather than for indicating or implying that the apparatuses or elements mentioned must have specific orientations or must be constructed or manipulated according to specific orientations, and therefore shall not be construed as any limitations on this application. In addition, the terms "first", "second", "third", and the like are merely intended for distinguishing purposes and shall not be understood as any indication or implication of relative importance.

Currently, from the perspective of market development, the application of battery cells is becoming more and more extensive. Battery cells have been widely used in many fields such as electric transportation tools including electric bicycles, electric motorcycles, and electric vehicles, electric tools, drones, and energy storage devices. With continuous expansion of application fields of battery cells, market demands for battery cells are also increasing.

Consumer batteries currently face bottlenecks in energy density improvement and cost reduction. There are two types of conventional battery cell structures: wound structure and laminated structure. A wound structure is formed by winding slit positive electrode plates, separators and negative electrode plates in sequence with a winding mandrel, compressing them into a cylindrical, elliptic, columnar, or rectangular shape and then putting them into an appropriate housing, where parameters such as the size of the electrode plates and winding turns are determined based on a designed capacity of a battery. A laminated structure is formed by cutting positive and negative electrode plates into a required size, laminating the positive electrode plates, separators, and negative electrode plates into small cells, and then stacking and connecting the small cells in parallel to form a battery module. Wound structures have become the mainstream structure for consumer batteries due to their lower manufacturing cost compared to laminated structures.

Currently, wound structures with a fast charging function usually have the following problems.

In a conventional wound structure, winding is performed in a same direction. To be specific, an uncoated foil of a negative electrode plate is wrapped by an upper separator and a lower separator and then wound; the negative electrode plate is wound by a half turn first and then a positive electrode plate is wound; and the winding is terminated at a single-sided region of the positive electrode plate or terminated at an uncoated foil region of the positive electrode plate. Such structure has the drawback that the uncoated foil and separators in the half turn of the head are wasted and do not participate in intercalation and deintercalation reaction of ions, resulting in energy density loss in the thickness direction. The uncoated foil region refers to a region where the current collector is provided with no active substance on both sides in the thickness direction. Since the uncoated foil region is provided with no active substance on both sides in the thickness direction, the uncoated foil region does not participate in charge and discharge reactions, and both sides of the uncoated foil region are provided with the separator, resulting in the waste of the uncoated foil and separators in the half turn of the head.

Based on this structure, winding of a wound structure may be performed in opposite directions. To be specific, a double-sided region of a negative electrode plate is wrapped by an upper separator and a lower separator and then wound, simultaneously a positive electrode plate is wound in an opposite direction, and the winding is terminated at a single-sided region of the negative electrode plate. Compared with the case in which the winding is performed in a same direction, such structure avoids the waste of the uncoated foil region of the head and increases the energy density gain by 0.8% to 1.5%. If the winding of the wound structure wound in opposite directions is terminated at the single-sided region of the negative electrode plate, since a structure of an aluminum-plastic film is formed by a PP (Polypropylene, polypropylene) layer, an AL (Aluminum) layer, and a nylon layer, the entire aluminum plastic film is stretched after pit formation, the PP layer, the AL layer, and the nylon layer are all thinned, the PP layer is weak especially in a corner region, and thus the AL layer is easily exposed; and if the PP layer is damaged during transportation or assembly of the battery cell, the negative electrode plate is exposed and comes into contact with the AL layer, causing a risk of corrosion. Therefore, a single-sided negative electrode plate is typically configured to be wrapped by separators, meaning that even the PP layer at the corner region is damaged, the AL layer is exposed and comes into direct contact with the separators, without direct contact with the negative electrode plate (for example, a copper foil), thereby avoiding the problem of corrosion.

Most of negative electrode plates often use metals with high reactivity, such as copper. When the negative electrode plate comes into direct contact with an aluminum layer, their difference in reactivity leads to a potential difference, and if moisture enters a contact region or the surrounding air is humid, an electrolyte is formed. in this way, a primary battery is formed. After a period of time, corrosion problem occurs.

However, termination at a separator causes the following problems.
1. The separator is made of a flexible material, so termination at the separator is not conducive to adhesion between the electrode assembly and the accommodating component. To be specific, a hot melt adhesive has poor adhesion to the separator, and when the hot melt adhesive is adhered to the separator and the accommodating component, the flexible separator is likely to deform, resulting in poor fixation of the electrode assembly in the accommodating component, thereby increasing the risk of movement of the battery cell during falling and simultaneously bringing the problems of separator shrinkage and micro short circuiting between the positive and negative electrode plates. In addition, a significant voltage drop is likely to occur, causing the problem of drop test failure.
2. Termination at a separator usually requires double-layer wrapping, which reduces the risk of exposing the negative electrode plate but increases the thickness of the electrode assembly by about 15 µm due to the double layers of separators, resulting in an energy density loss of about 0.5% to 1%.
3. In addition, to ensure the adhesion performance of hot melt adhesive paper, the existing hot melt adhesive paper is relatively thick, occupying an additional thickness of about 25 µm to 35 µm. The hot melt adhesive paper is activated to be adhesive under high temperature and pressure, thereby achieving the function of adhesion to the accommodating component.

Therefore, this application proposes a battery cell. The battery cell includes an electrode assembly 100 and an accommodating component. The electrode assembly 100 is configured as a wound structure, and an installation space for accommodating the electrode assembly 100 is provided in the accommodating component. The battery cell may be, but is not limited to, a lithium-ion battery cell, a sodium-ion battery cell, a sodium-lithium-ion battery cell, a lithium-metal battery cell, a sodium-metal battery cell, a lithium-sulfur battery cell, a magnesium-ion battery cell, a nickel-metal hydride battery cell, and a nickel-cadmium battery cell.

The electrode assembly 100 includes a positive electrode plate 110 and a negative electrode plate 120. The positive electrode plate 110 and the negative electrode plate 120 can be separated by a separator. The positive electrode plate 110, negative electrode plate 120, and separator are wound to form the wound structure. During charge and discharge of the battery cell, active ions (for example, lithium ions) intercalate and deintercalate back and forth between the positive electrode plate 110 and the negative electrode plate 120. The separator is disposed between the positive electrode plate 110 and the negative electrode plate 120 to prevent short circuits between the positive and negative electrodes and allow active ions to pass through.

The positive electrode plate 110 may include a positive electrode current collector, and the positive electrode plate 110 may further include a positive electrode current collector and a positive electrode active material provided on at least one surface of the positive electrode current collector.

In an example, the positive electrode current collector may be a metal foil current collector or a composite current collector. For example, as the metal foil, the positive electrode current collector may use aluminum with a silver-plated surface, stainless steel with a silver-plated surface, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, or respective modified compounds thereof. However, this application is not limited to these materials, and may alternatively use other conventional materials that can be used as positive electrode active materials for batteries.

A negative electrode plate 120 may include a negative electrode current collector, and the negative electrode plate 120 may further include a negative electrode active substance disposed on at least one surface of the negative electrode current collector.

In an example, the negative electrode current collector may be a metal foil current collector or a composite current collector. For example, as the metal foil, the negative electrode current collector may use aluminum with a silver-plated surface, stainless steel with a silver-plated surface, stainless steel, copper, aluminum, nickel, baked carbon, carbon, nickel, or titanium.

In an example, the negative electrode active substance may be a negative electrode active substance for batteries well known in the art. In an example, the negative electrode active substance may include at least one of the following materials: artificial graphite, natural graphite, soft carbon, hard carbon, silicon-based material, tin-based material, or lithium titanate. The silicon-based material may be selected from at least one of elemental silicon, silicon-oxygen compound, silicon-carbon composite, siliconnitrogen composite, or silicon alloy. The tin-based material may be selected from at least one of elemental tin, tin-oxygen compound, or tin alloy. However, this application is not limited to these materials, and may alternatively use other conventional materials that can be used as negative electrode active substances for batteries. One of these negative electrode active substances may be used alone, or two or more of them may be used in combination.

The separator is not limited to any particular type in this application, and may be any well-known porous separator with good chemical stability and mechanical stability.

In an example, major materials of the separator may be selected from at least one of glass fiber, non-woven fabric, polyethylene, polypropylene, polyvinylidene fluoride, or ceramics. The separator may be a single-layer film or a multi-layer composite film, and is not particularly limited. When the separator is a multi-layer composite film, all layers may be made of same or different materials, which is not particularly limited. The separating member may be an independent component located between the positive and negative electrodes, or may be attached to surfaces of the positive and negative electrodes.

In some embodiments, the separator is a solid electrolyte. The solid electrolyte is arranged between the positive and negative electrodes, and plays the roles of transporting ions and isolating the positive and negative electrodes.

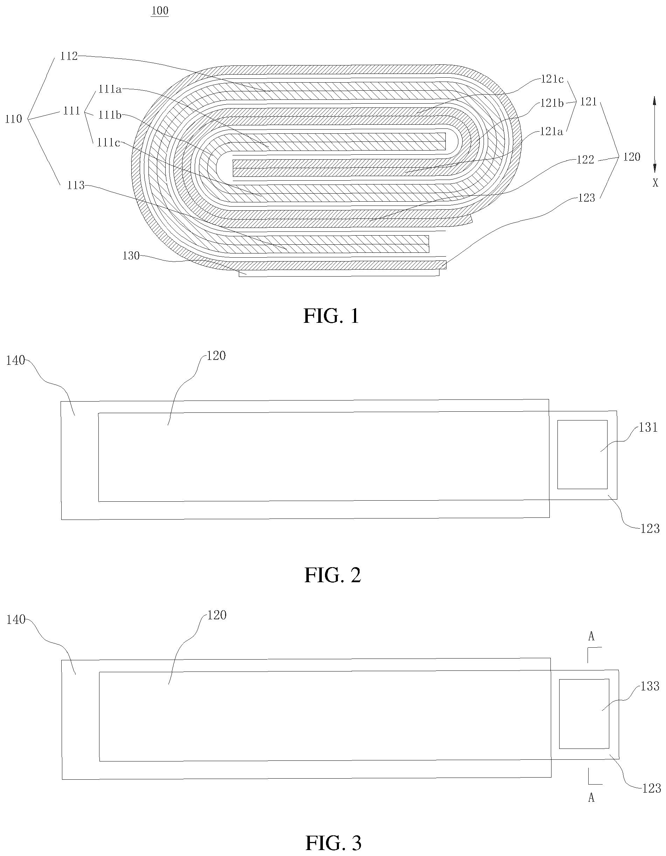

In this application, as shown in FIG. 1 to FIG. 4, the negative electrode plate 120 includes a negative electrode terminating section 123, where the negative electrode terminating section 123 is provided at an outermost circle of the electrode assembly 100. To be specific, the electrode assembly 100 is terminated by the negative electrode terminating section 123. An insulating layer 130 is provided on an outer side surface of the negative electrode terminating section 123, and the insulating layer 130 is adhesively fixed to the accommodating component.

To be specific, in this embodiment of this application, an outer side of the negative electrode terminating section 123 is no longer provided with a separator, and the insulating layer 130 is not provided on the outermost separator but directly on the outer side surface of the negative electrode terminating section 123.

In this application, the termination of the electrode assembly 100 is implemented by the negative electrode terminating section 123, eliminating the need for a separator on the outer side of the negative electrode terminating section 123, thereby reducing energy density loss of the electrode assembly 100 in the thickness direction caused by the termination at the separator. In addition, the insulating layer 130 is directly installed on the negative electrode terminating section 123, and the insulating layer 130 is adhesively fixed to the accommodating component. The negative electrode terminating section 123 has higher structural strength than the separator. Therefore, providing the insulating layer 130 directly on the negative electrode terminating section 123 can improve the connection stability between the electrode assembly 100 and the accommodating component.

In the prior art, a technical solution in which the electrode assembly 100 is terminated at a separator is adopted. In this solution, an adhesive layer for adhesively fixing the electrode assembly 100 to the accommodating component can only be adhered to the separator, but the adhesion between the adhesive layer and the separator is poor, and when a hot melt adhesive is adhered to the separator and the accommodating component, the flexible separator is likely to deform, resulting in poor stability of the electrode assembly 100 in the accommodating component, thereby increasing the risk of movement of the battery cell during falling and increasing the possibility of simultaneous occurrence of problems such as separator shrinkage, micro short circuiting between the positive and negative electrodes, significant voltage drop, and drop test failure.

Moreover, in the technical solution in which termination is performed at the separator, the separator occupies space of the electrode assembly 100 in the thickness direction, and the termination at the separator usually requires double-layer wrapping, increasing the thickness by about 15 µm, thus resulting in an energy density loss of about 0.5% to 1% of the electrode assembly 100 in the thickness direction.

Apparently, in the technical solution of this application, the electrode assembly 100 is terminated by the negative electrode terminating section 123, and the insulating layer 130 is directly provided on the outer side surface of the negative electrode terminating section 123. In addition, the adhesive layer and the accommodating component are fixedly connected by virtue of the adhesivity of the insulating layer 130. This not only improves the stability of the electrode assembly 100 in the accommodating component and reduces the problems such as movement of the electrode assembly 100 in the accommodating component when the battery cell drops, but also reduces energy density loss of the electrode assembly 100 in the thickness direction in comparison with the solutions of the prior art.

Once the electrode assembly 100 is wound, a winding mandrel needs to be removed from the electrode assembly 100, and then clamping jaws at an innermost side of the electrode assembly 100 move to two sides, such that a circular cross section of the electrode assembly 100 is stretched into a flat cross section. In this case, a direction in which side surfaces of the electrode assembly that are close to and facing each other are spaced apart is the thickness direction of the electrode assembly in this embodiment of this application, specifically shown as a direction X in FIG. 1.

The battery cell of this application can be used in electronic products, such as mobile phones or computers. When electronic products experience bumps, drops, or the like, since the electrode assembly 100 is firmly fixed to the accommodating component, the electrode assembly 100 can be effectively prevented from moving in the accommodating component, improving the stability of the battery cell. In addition, the energy density loss of the electrode assembly 100 of the battery cell in the thickness direction in this application is reduced, thereby improving the endurance of electronic products and improving the user experience of electronic products.

The accommodating component in this application may be a housing structure of the battery cell, capable of protecting the electrode assembly 100 therein. The accommodating component may be a pouch or a hard shell, and the type of the accommodating component can be freely selected based on its application scenarios and the type of the electrode assembly therein. This is not specifically limited herein.

For example, when the battery cell is a pouch cell, the accommodating component may be a packaging bag. The accommodating component in this application may be formed by processing an aluminum-plastic film. The structure of the aluminum-plastic film may include a PP layer, an AL layer, and a nylon layer. After pit formation, the entire aluminum-plastic film is stretched to form an accommodating component with an installation space.

An outermost electrode plate of the electrode assembly 100 means that termination is performed at a terminating section of this electrode plate. For example, if the outermost electrode plate of the electrode assembly 100 is the negative electrode plate 120, the electrode assembly 100 is terminated by the terminating section of the negative electrode plate 120, and the terminating section of the negative electrode plate 120 faces an inner side surface of the accommodating component. The negative electrode plate 120 includes a negative electrode terminating section 123 located at its tail in a winding direction. The negative electrode terminating section 123 is provided at an outermost side of the electrode assembly 100, and the electrode assembly 100 is terminated by the negative electrode terminating section 123.

The insulating layer 130 in this application features insulating properties and therefore is capable of isolating the outer side surface of the negative electrode terminating section 123 from the inner side surface of the accommodating component, avoiding electrical connection between the negative electrode terminating section 123 and the accommodating component, thereby reducing the possibility of corrosion between the accommodating component and the negative electrode plate 120. In addition, the insulating layer 130 further has adhesivity, so that the insulating layer 130 can be adhesively fixed to the accommodating component. The insulating layer 130 may have adhesivity by itself or may have adhesivity by an adhesive layer adhered thereto. A specific structure of the insulating layer 130 is described in detail hereinafter and is not described herein again.

In some embodiments of this application, as shown in FIG. 1, at least a portion of the negative electrode terminating section 123 is configured as a single-sided region, and the insulating layer 130 is provided on the single-sided region. The negative electrode terminating section 123 may be partially configured as a single-sided region, or the negative electrode terminating section 123 may be entirely configured as a single-sided region. In these embodiments of this application, the entire outer side surface of the negative electrode terminating section 123 is not provided with a corresponding positive electrode active substance, so the negative electrode terminating section 123 can be entirely configured as a single-sided region, thereby reducing the thickness of the negative electrode terminating section 123 and reducing the energy density loss of the electrode assembly 100 in the thickness direction.

It should be noted that the negative electrode plate 120 may include a negative electrode current collector 101 and a negative electrode active substance 102 provided on at least one surface of the negative electrode current collector 101. The negative electrode current collector 101 has two opposite surfaces in its thickness direction, and the negative electrode active substance 102 is provided on either or both of the two opposite surfaces of the negative electrode current collector 101.

The single-sided region of the negative electrode plate 120 refers to a region where only one surface of the negative electrode current collector 101 is provided with the negative electrode active substance 102, and this section of the negative electrode current collector 101 and the negative electrode active substance 102 on one surface thereof are collectively referred to as the single-sided region of the negative electrode plate 120. Since the electrode assembly 100 in this application is terminated by the negative electrode terminating section 123, the outer side surface of the negative electrode terminating section 123 is not provided with a corresponding positive electrode plate 110. In this case, the outer side surface of the negative electrode current collector 101 at the negative electrode terminating section 123 does not need to be provided with the negative electrode active substance 102, and the outer side surface of the negative electrode current collector 101 at the negative electrode terminating section 123 is the outer side surface of the negative electrode terminating section 123. The insulating layer 130 is provided on the outer side surface of the negative electrode current collector 101 at the negative electrode terminating section 123.

In these embodiments of this application, at least a portion of the negative electrode terminating section 123 is configured as a single-sided region, and the insulating layer 130 is provided on the single-sided region. This can not only reduce the use of the negative electrode active substance 102 but also reduce the thickness of the terminating section of the negative electrode plate 120, thereby reducing the energy density loss of the electrode assembly 100 in the thickness direction.

Furthermore, the single-sided region of the negative electrode terminating section 123 is provided with an adhesive layer. An adhesion region is large enough to effectively ensure that the electrode assembly 100 does not move in the accommodating component during falling of the battery cell, thereby avoiding the problem of failure caused by voltage drop.

In some embodiments of this application, at least a portion of the negative electrode terminating section 123 is configured as an uncoated foil region, and the insulating layer 130 is provided on the uncoated foil region. The negative electrode terminating section 123 may be partially configured as an uncoated foil region. Certainly, the negative electrode terminating section 123 may be entirely configured as an uncoated foil region. This is not specifically limited herein.

The uncoated foil region of the negative electrode plate refers to a region where neither side of the negative electrode current collector in the thickness direction is provided with an active substance, and this section of the negative electrode current collector 101 is referred to as the uncoated foil region of the negative electrode plate. In these embodiments of this application, the negative electrode current collector 101 at the negative electrode terminating section 123 is directly exposed, with no negative electrode active substance 102 provided on either side of the negative electrode current collector 101 at the negative electrode terminating section 123 in the thickness direction. The outer side surface of the negative electrode current collector 101 at the negative electrode terminating section 123 is the outer side surface of the negative electrode terminating section 123, and the insulating layer 130 is provided on the outer side surface of the negative electrode current collector 101 at the negative electrode terminating section 123.

In these embodiments of this application, at least a portion of the negative electrode terminating section 123 is configured as an uncoated foil region, and the insulating layer 130 is provided on the uncoated foil region. This can not only reduce the use of the negative electrode active substance 102 but also reduce the thickness of the negative electrode terminating section 123, thereby reducing the energy density loss of the electrode assembly 100 in the thickness direction.

According the claimed subject-matter, as shown in FIG. 2, the insulating layer 130 is configured as a first adhesive layer 131 so as to be adhesively fixed to the accommodating component. To be specific, the insulating layer 130 has not only an insulation function but also adhesion performance. Therefore, the electrode assembly 100 can be adhesively fixed to the accommodating component by adhesion force of the insulating layer 130, without additional arrangement of an adhesive layer.

According the claimed subject-matter, the first adhesive layer 131 has a thickness denoted as t1, and t1 satisfies: 1 µm ≤ t1 ≤ 10 µm. Since the first adhesive layer 131 may be formed by applying an adhesive slurry onto the negative electrode terminating section 123, thickness of the first adhesive layer 131 can be a size of the first adhesive layer 131 in the thickness direction of the negative electrode terminating section 123.

Generally, the thickness of the first adhesive layer 131 is proportional to the adhesion strength of the first adhesive layer 131. A larger thickness of the first adhesive layer 131 indicates a larger adhesion force of the first adhesive layer 131. On the contrary a smaller thickness of the first adhesive layer 131 indicates a smaller adhesion force of the first adhesive layer 131. However, in actual selection, not only influence of the adhesion force of the first adhesive layer 131 but also influence of the thickness of the first adhesive layer 131 on the energy density of the electrode assembly 100 should be considered. A larger thickness of the first adhesive layer 131 results in a larger energy density loss of the electrode assembly 100 in the thickness direction; and a smaller thickness of the first adhesive layer 131 results in a smaller energy density loss of the electrode assembly 100 in the thickness direction.

The thickness of the first adhesive layer 131 being within the above range can ensure that the first adhesive layer 131 has sufficient adhesion performance while the thickness of the first adhesive layer 131 is not too large, thereby preventing the energy density loss of the battery cell in the thickness direction due to a large thickness of the first adhesive layer 131.

For example, the thickness of the first adhesive layer 131 may be 1 µm, 3 µm, 5 µm, 7 µm, 9 µm, or 10 µm. The thickness of the first adhesive layer 131 is not specifically limited in this application as long as the thickness of the first adhesive layer 131 is within the above range.

In some embodiments of this application, the thickness t1 of the first adhesive layer 131 satisfies: 3 µm ≤ t1 ≤ 8 µm. The thickness of the first adhesive layer 131 being within the above range can ensure that the first adhesive layer 131 has sufficient adhesion performance while the thickness of the first adhesive layer 131 is not too large, thereby preventing the energy density loss of the battery cell in the thickness direction due to a large thickness of the first adhesive layer 131.

For example, the thickness of the first adhesive layer 131 may be 3 µm, 4 µm, 6 µm, or 8 µm. The thickness of the first adhesive layer 131 is not specifically limited in this application as long as the thickness of the first adhesive layer 131 is within the above range. In the prior art, thickness of a hot melt adhesive layer adhered to the separator is 25 µm to 35 µm. The thickness of the first adhesive layer 131 in these embodiments of this application is significantly reduced in comparison with the hot melt adhesive layer in the prior art, thereby reducing a size of the electrode assembly 100 in the thickness direction and increasing the energy density of the electrode assembly 100 in the thickness direction.

In some embodiments of this application, the first adhesive layer 131 has a roughness denoted as Ra, and Ra satisfies: 1 µm ≤ Ra ≤ 20 µm. The roughness of the first adhesive layer 131 represents a roughness of an adhesive surface of the first adhesive layer 131. It can be understood that the roughness of the first adhesive layer 131 can indicate the adhesion strength of the first adhesive layer 131. A larger roughness of the first adhesive layer 131 indicates a larger adhesion strength of the first adhesive layer 131. The roughness of the first adhesive layer 131 satisfying the above condition can ensure that the electrode assembly 100 can be firmly adhesively fixed to the accommodating component when the first adhesive layer 131 is adhesively fixed to the accommodating component.

For example, the roughness of the first adhesive layer 131 may be 1 µm, 4 µm, 8 µm, 12 µm, 16 µm, or 20 µm. The roughness of the first adhesive layer 131 is not limited to any specific value in this application as long as the roughness of the first adhesive layer 131 is within the above range.

In some embodiments of this application, the roughness Ra of the first adhesive layer 131 satisfies: 5 µm ≤ Ra ≤ 7 µm. The roughness of the first adhesive layer 131 satisfying the above condition can ensure that the electrode assembly 100 can be firmly adhesively fixed to the accommodating component when the first adhesive layer 131 is adhesively fixed to the accommodating component.

For example, the roughness of the first adhesive layer 131 may be 5 µm, 6 µm, or 7 µm. The roughness of the first adhesive layer 131is not limited to any specific value as long as the roughness of the first adhesive layer 131 is within the above range.

In some embodiments of this application, the first adhesive layer 131 is adhesively fixed to not only the outer side surface of the negative electrode terminating section 123 but also the inner side surface of the accommodating component. The first adhesive layer 131 may be first adhesively fixed to the outer side surface of the negative electrode terminating section 123 and then adhesively fixed to the accommodating component after the electrode assembly 100 is installed in the accommodating component.

According to some embodiments of this application, composition of the first adhesive layer 131 includes polyolefin and further includes at least one of polyurethane or polyamide. Main components of a slurry forming the first adhesive layer 131 may include an adhesive material and a forming material. The adhesive material can ensure the adhesion performance of the first adhesive layer 131, and the forming material can ensure the forming performance of the first adhesive layer 131.

The adhesive material may be polyolefin, which ensures the adhesion performance of the first adhesive layer 131, and the adhesive material swells slightly after soaked in an electrolyte, thus preventing adhesion failure. The forming material may be polyurethane or polyamide, which ensures plasticization and forming at high temperatures.

In some embodiments of this application, the first adhesive layer 131 may be formed by applying an adhesive slurry onto the negative electrode terminating section 123 and then performing drying. The adhesive slurry is applied onto one side of the single-sided region of the negative electrode terminating section 123, with a coating thickness controlled to be about 5 µm or 10 µm and a roughness of 5 µm and 7 µm after drying.

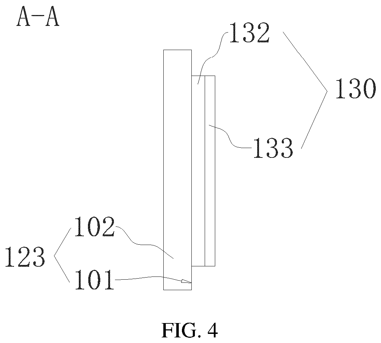

In some embodiments of this application, as shown in FIG. 3 and FIG. 4, the insulating layer 130 includes an insulating layer body 132 and a second adhesive layer 133. The insulating layer body 132 is provided on the terminating section of the negative electrode plate 120, and the second adhesive layer 133 is provided on the insulating layer body 132 and is adhesively fixed to the accommodating component.

To be specific, the insulating layer body 132 is not an adhesive component but can provide an insulation function. Actually, the second adhesive layer 133 is used to adhesively fix the electrode assembly 100 to the accommodating component. One side surface of the insulating layer body 132 may be connected to the negative electrode terminating section 123, another side surface of the insulating layer body 132 is adhesively fixed to one side surface of the second adhesive layer 133, and another side surface of the second adhesive layer 133 may be adhesively fixed to the accommodating component.

In some embodiments of this application, the second adhesive layer 133 also features insulating properties, further ensuring no electrical connection between the negative electrode terminating section 123 and the accommodating component. In addition, the insulating layer body 132 may also be adhesively fixed to the negative electrode terminating section 123. The insulating layer body 132 is adhesively fixed to the negative electrode terminating section 123 through another adhesive layer.

In an embodiment of this application, the second adhesive layer 133 is configured as hot melt adhesive paper attached to the insulating layer body 132. The hot melt adhesive paper can be directly attached to the insulating layer body 132, and when the electrode assembly 100 is installed in the accommodating component, the hot melt adhesive paper is also adhesively fixed to an inner side wall of the accommodating component, such that the electrode assembly 100 is adhesively fixed to the accommodating component by the hot melt adhesive paper.

According to an embodiment of this application, the hot melt adhesive paper has a length of 45 mm to 70 mm and a width of 30 mm to 40 mm. The length and width of the hot melt adhesive paper directly determine an adhesion area between the hot melt adhesive paper and the accommodating component. A larger adhesion area results in a larger adhesion force between the hot melt adhesive paper and the accommodating component. In this embodiment of this application, the length and width of the hot melt adhesive paper being within the above range can not only ensure the adhesion strength between the hot melt adhesive paper and the accommodating component but also avoid wasting too much hot melt adhesive paper, thereby reducing the production cost of the battery cell.

For example, the length of the hot melt adhesive paper may be 45 mm, 50 mm, 55 mm, 60 mm, 65 mm, or 70 mm, and the width of the hot melt adhesive paper may be 30 mm, 32 mm, 34 mm, 36 mm, 38 mm, or 40 mm. The length and width of the hot melt adhesive paper are not limited to any specific values as long as the length and width of the hot melt adhesive paper are within the above ranges.

In some embodiments of this application, the thickness of the hot melt adhesive paper is 10 µm to 25 µm. As compared with a solution of the prior art in which thicker hot melt adhesive paper attached to a separator, the thickness of the hot melt adhesive paper in this application is significantly reduced, thereby reducing a size of the battery cell in the thickness direction and the energy density loss of the battery cell in the thickness direction. However, it should be noted that the hot melt adhesive paper in these embodiments of this application has a smaller thickness but has sufficient adhesion performance to firmly adhesively fix the electrode assembly to the accommodating component.

Generally, the thickness of the second adhesive layer 133 is proportional to the adhesion strength of the second adhesive layer 133. A larger thickness of the second adhesive layer 133 indicates a larger adhesion force of the second adhesive layer 133. On the contrary, a smaller thickness of the second adhesive layer 133 indicates a smaller adhesion force of the second adhesive layer 133. However, in actual selection, not only influence of the adhesion force of the second adhesive layer 133 but also influence of the thickness of the second adhesive layer 133 on the energy density of the electrode assembly 100 should be considered. A larger thickness of the second adhesive layer 133 results in a larger energy density loss of the electrode assembly 100 in the thickness direction; and a smaller thickness of the second adhesive layer 133 results in a smaller energy density loss of the electrode assembly 100 in the thickness direction.

For example, the thickness of the second adhesive layer 133 (that is, hot melt adhesive paper) may be 10 µm, 15 µm, 20 µm, or 25 µm. The thickness of the hot melt adhesive paper is not limited in this application as long as the thickness of the hot melt adhesive paper is within the above range.

According to some embodiments of this application, composition of the second adhesive layer 133 includes polyolefin and further includes at least one of polyurethane or polyamide. Main components of a slurry forming the second adhesive layer 133 may include an adhesive material and a forming material. The adhesive material can ensure the adhesion performance of the second adhesive layer 133, and the forming material can ensure the forming performance of the second adhesive layer 133.

The adhesive material may be polyolefin, which ensures the adhesion performance of the second adhesive layer 133, and the adhesive material swells slightly after soaked in an electrolyte, thus preventing adhesion failure. The forming material may be polyurethane or polyamide, which ensures plasticization and forming at high temperatures.

In some embodiments of this application, the second adhesive layer 133 may be formed by applying an adhesive slurry onto the insulating layer body 132 and then performing drying. In the prior art, thickness of a hot melt adhesive layer adhered to the separator is 25 µm to 35 µm. The thickness of the second adhesive layer 133 in these embodiments of this application is significantly reduced in comparison with the hot melt adhesive layer in the prior art, thereby reducing a size of the electrode assembly 100 in the thickness direction and improving the energy density of the electrode assembly 100 in the thickness direction.

According to the claimed subject-matter, as shown in FIG. 1, the positive electrode plate 110 includes a positive electrode starting section 111, a positive electrode middle section 112, and a positive electrode terminating section 113 sequentially connected in a winding direction; and the negative electrode plate 120 includes: a negative electrode starting section 121, a negative electrode middle section 122, and a negative electrode terminating section 123 sequentially connected in the winding direction.

The positive electrode starting section 111 is an initial winding section of the positive electrode plate 110, the positive electrode terminating section 113 is a final winding section of the positive electrode plate 110, and the positive electrode middle section 112 is a middle winding section of the positive electrode plate 110. The negative electrode starting section 121 is an initial winding section of the negative electrode plate 120, the negative electrode terminating section 123 is a final winding section of the negative electrode plate 120, and the negative electrode middle section 122 is a middle winding section of the negative electrode plate 120. In the winding direction, the positive electrode starting section 111 is an innermost section of the positive electrode plate 110, and the positive electrode terminating section 113 is an outermost section of the positive electrode plate 110. In the winding direction, the negative electrode starting section 121 is an innermost section of the negative electrode plate 120, and the negative electrode terminating section 123 is an outermost section of the negative electrode plate 120.

The positive electrode starting section 111 includes a first straight section 111a, a first bent section 111b, and a second straight section 111c sequentially connected in the winding direction; and the negative electrode starting section 121 includes a third straight section 121a, a second bent section 121b, and a fourth straight section 121c sequentially connected in the winding direction. A free end of the first straight section 111a faces an inner side surface of the second bent section 121b, and a free end of the third straight section 121a faces an inner side surface of the first bent section 111b.

To be specific, the positive electrode starting section 111 and the negative electrode starting section 121 are plug-in structures, and the positive electrode plate 110 and the negative electrode plate 120 are wound in opposite directions. In an existing winding method, a positive electrode plate and a negative electrode plate are wound in a same direction. To be specific, an uncoated foil portion of the negative electrode plate is wrapped by an upper separator and a lower separator and then wound; and the negative electrode plate is wound by a half turn first and then the positive electrode plate is wound. Such structure has the drawback that the uncoated foil portion of the negative electrode plate and the separators in the half turn of the head are wasted and do not participate in intercalation and deintercalation reaction of ions, resulting in energy density loss of the electrode assembly in the thickness direction. According to the electrode assembly 100 in these embodiments of this application, the positive electrode starting section 111 and the negative electrode starting section 121 are plug-in structures, and the positive electrode plate 110 and the negative electrode plate 120 are wound in opposite directions. Therefore, compared with the winding method in the prior art, this method avoids the waste of the uncoated foil portion of the head of the negative electrode starting section 121 and increases the energy density gain.

In some embodiments of this application, the positive electrode starting section 111, the positive electrode middle section 112, and the positive electrode terminating section 113 are each provided with positive electrode active substances on both two side surfaces in the thickness direction. That is, the positive electrode starting section 111, the positive electrode middle section 112, and the positive electrode terminating section 113 are all double-sided regions. To be specific, the positive electrode current collector of the positive electrode plate 110 is provided with the positive electrode active substances on both two side surfaces in the thickness direction. The positive electrode active substances on both sides of the positive electrode current collector in the thickness direction face corresponding negative electrode active substances 102.

The negative electrode starting section 121 and the negative electrode middle section 122 are each provided with the negative electrode active substances 102 on both two side surfaces in the thickness direction, the inner side surface of the negative electrode terminating section 123 is provided with the negative electrode active substance 102, and the outer side surface of the negative electrode terminating section 123 is not provided with the negative electrode active substance 102. That is, the negative electrode starting section 121 and the negative electrode middle section 122 are double-sided regions, and the negative electrode terminating section 123 is a single-sided region. To be specific, the negative electrode current collector 101 at the negative electrode starting section 121 and the negative electrode middle section 122 is provided with the negative electrode active substances 102 on both two side surfaces in the thickness direction, while the negative electrode current collector 101 at the negative electrode terminating section 123 is provided with the negative electrode active substance 102 on only one of the two side surfaces in the thickness direction.

Continuous double-sided coating is performed for the positive electrode starting section 111, the positive electrode middle section 112, and the positive electrode terminating section 113, where the positive electrode active substance is applied onto the two side surfaces of the positive electrode current collector in the thickness direction, to form the positive electrode starting section 111, the positive electrode middle section 112, and the positive electrode terminating section 113. Continuous double-sided coating is performed for the negative electrode starting section 121 and the negative electrode middle section 122, and single-sided coating is performed for the negative electrode terminating section 123, where the negative electrode active substance 102 is provided on only the inner side surface of the negative electrode terminating section 123. Since an outer side of the negative electrode terminating section 123 is not provided with a corresponding positive electrode plate 110, the outer side surface of the negative electrode terminating section 123 does not participate in intercalation and deintercalation reaction of ions, and thus the negative electrode active substance 102 does not need to be provided on the outer side surface of the negative electrode terminating section 123. This reduces the amount of the negative electrode active substance 102 used and reduces the production cost of the electrode assembly 100 to some extent.

According the claimed subject-matter, a free end of the negative electrode starting section 121 is configured as a negative electrode starting end, and a free end of the positive electrode starting section 111 is configured as a positive electrode starting end. The orientation of the negative electrode starting end is opposite to that of the positive electrode starting end. To be specific, the positive electrode plate and the negative electrode plate are plug-in structures, where the negative electrode starting end faces an innermost corner of the positive electrode plate 110, and the positive electrode starting end faces an innermost corner of the negative electrode plate 120. This differs from the method of winding the uncoated foil of the electrode plate, avoiding the waste of the uncoated foil and separators at the head.

The first bent section 111b is a first corner at the innermost circle of the positive electrode plate 110 in the winding direction, and the second bent section 121b is a first corner at the innermost circle of the negative electrode plate 120 in the winding direction. In these embodiments of this application, a free end of the first straight section 111a faces an inner side surface of the first corner at the innermost circle of the negative electrode plate 120 in the winding direction, and a free end of the third straight section 121a faces an inner side surface of the first corner at the innermost circle of the positive electrode plate 110 in the winding direction.

According to some embodiments of this application, the battery cell is configured as a pouch cell, and the accommodating component is configured as a packaging bag. The packaging bag may be formed by processing an aluminum-plastic film, that is, the accommodating component is configured as an aluminum-plastic film bag. The pouch cell has a higher electrical capacity per unit volume, and the installation and use of the battery cell are more flexible.

In some embodiments of this application, after the electrode assembly 100 is immersed in an electrolyte and after formation of the battery cell, the adhesivity of the insulating layer 130 is activated for adhesively fixing the electrode assembly 100 to the accommodating component. To be specific, once the electrode assembly 100 is installed in the accommodating component, the insulating layer 130 does not have sufficient adhesivity or even has no adhesivity, and the adhesion performance of the insulating layer 130 can be activated under high-temperature and high-pressure environments only after electrolyte injection and formation steps, so that the electrode assembly 100 and the accommodating component are adhesively fixed.

Since the adhesion performance of the insulating layer 130 is activated only after electrolyte injection and formation, the step of installing the electrode assembly 100 in the accommodating component becomes quite convenient, reducing the possibility that the electrode assembly 100 cannot be installed in the accommodating component due to adhesion performance. If the insulating layer 130 always has strong adhesion performance, during installation of the electrode assembly 100 into the accommodating component, there is a high probability that the insulating layer 130 is adhered to a side wall of the accommodating component before the electrode assembly 100 is entirely installed in the accommodating component, causing a failure in installation of the electrode assembly 100.

In some embodiments of this application, after winding and pre-pressing of the electrode assembly 100 are completed, the negative electrode terminating section 123 completes the termination, and the insulating layer 130 is provided on the outer side surface of the negative electrode terminating section 123. In this case, the insulating layer 130 has no adhesivity or weak adhesivity. During the installation of the electrode assembly 100 into the accommodating component, the insulating layer 130 is adhered to the inner side surface of the accommodating component, allowing the electrode assembly 100 to be smoothly installed at a specified position of the accommodating component as a whole. Then, during electrolyte injection and formation processes, under a high-temperature and high-pressure temperature, the insulating layer 130 having no adhesivity or weak adhesivity gains strong adhesion performance and is adhesively fixed to the inner side wall of the accommodating component, ensuring that the electrode assembly 100 is firmly installed in the accommodating component.

In some embodiments of this application, after the battery cell is subjected to electrolyte injection and formation, the adhesion strength between the insulating layer 130 and the accommodating component is not less than 25 N/m. Therefore, even when soaked in the electrolyte, the insulating layer 130 still has sufficient adhesion strength to firmly adhere the electrode assembly 100 to the accommodating component.

It can be understood that after the battery cell is subjected to electrolyte injection, the insulating layer 130 is soaked in the electrolyte, and the insulating layer 130 with weak adhesivity is very likely to lose its adhesivity when soaked in the electrolyte, causing the insulating layer 130 to detach from the accommodating component. In these embodiments of this application, the adhesion strength between the insulating layer 130 and the accommodating component is not less than 25 N/m, ensuring that even when the insulating layer 130 is soaked in the electrolyte, the insulating layer 130 still has sufficient adhesivity to the accommodating component, allowing the electrode assembly 100 to be firmly installed in the accommodating component.

### Example 1:

A negative electrode plate 120 was provided with a double-sided region and a single-sided region through coating. After an active substance was applied to form the single-sided region and the double-sided region, an adhesive layer (which is an insulating layer 130 with adhesivity, referred to as a first adhesive layer 131) was applied onto the single-sided region of the negative electrode plate 120 where no active substance was provided.

A slurry of the adhesive layer included a composition of an adhesive material, such as polyolefin having a mass percentage of 50% and a function of ensuring the adhesion performance of the adhesive layer. In addition, after soaked in an electrolyte, the adhesive material had slight swelling and avoided adhesion failure. The slurry of the adhesive layer also included a composition of a thermoplastic material, such as polyurethane or polyamide having a mass percentage of 20% and a function of ensuring plasticization and forming at high temperatures. Besides, the slurry also included fillers, such as titanium dioxide and talcum powder.

The slurry was applied onto one side of the single-sided region of the negative electrode terminating section 123, with a coating thickness controlled to be about 5 µm and a roughness of 5 µm to 7 µm after drying.

The positive electrode plate 110 was coated, forming double-sided regions, without any single-sided region.

Two separators were used to wrap the negative electrode plate 120 and the positive electrode plate 110. The positive and negative electrode plates were simultaneously wound. During termination, the negative electrode terminating section (including the separators) wrapped a positive electrode, with the separators slightly longer than the positive electrode.

After the electrode assembly was placed in the accommodating component, an adhesive layer on the negative electrode terminating section 123 was activated to be adhesive after electrolyte injection and formation,
so as to be adhered to the accommodating component, thereby fixing the electrode assembly in the accommodating component. Thus, in a subsequent drop test, movement of the electrode assembly caused by insufficient adhesion between the electrode assembly and the accommodating component was avoided, and accordingly a series of failures caused by voltage drop, such as micro short circuiting between the positive and negative electrodes and separator shrinkage, were avoided.

### Example 2:

A negative electrode plate 120 was provided with a double-sided region and a single-sided region through coating. After an active substance was applied to form the single-sided region and the double-sided region, an adhesive layer (which is an insulating layer 130 with adhesivity, referred to as a first adhesive layer 131) was applied onto the single-sided region of the negative electrode plate 120 where no active substance was provided.

A slurry of the adhesive layer included a composition of an adhesive material, such as polyolefin having a mass percentage of 50% and a function of ensuring the adhesion performance of the adhesive layer. In addition, after soaked in an electrolyte, the adhesive material had slight swelling and avoided adhesion failure. The slurry of the adhesive layer also included a composition of a thermoplastic material, such as polyurethane or polyamide having a mass percentage of 20% and a function of ensuring plasticization and forming at high temperatures. Besides, the slurry also included fillers, such as titanium dioxide and talcum powder.

The slurry was applied onto one side of the single-sided region of the negative electrode terminating section 123, with a coating thickness controlled to be about 10 µm and a roughness of 5 µm to 7 µm after drying.

The positive electrode plate 110 was coated, forming double-sided regions, without any single-sided region.

Two separators were used to wrap the negative electrode plate 120 and the positive electrode plate 110. The positive and negative electrode plates were simultaneously wound. During termination, the negative electrode terminating section (including the separators) wrapped a positive electrode, with the separators slightly longer than the positive electrode.

After the electrode assembly was placed in the accommodating component, an adhesive layer on the negative electrode terminating section 123 was activated to be adhesive after electrolyte injection and formation, so as to be adhered to the accommodating component, thereby fixing the electrode assembly in the accommodating component. Thus, in a subsequent drop test, movement of the electrode assembly caused by insufficient adhesion between the electrode assembly and the accommodating component was avoided, and accordingly a series of failure issues caused by voltage drop, such as micro short circuiting between the positive and negative electrodes and separator shrinkage, were avoided.

Example 3: A negative electrode plate 120 was provided with a double-sided region and a single-sided region through coating. After an active substance was applied to form the single-sided region and the double-sided region, an insulating layer body 132 was applied onto the single-sided region of the negative electrode plate 120 where no active substance was provided. Main components of the insulating layer body 132 included alumina, zirconia, magnesium oxide, and the like.

Hot melt adhesive paper (that is, a second adhesive layer 133) was adhered to the insulating layer body 132. Dimensions of the adhesive paper were 30 mm * 45 mm, and a total thickness of the insulating layer body 132 and the hot melt adhesive paper was 25 µm.

The positive electrode plate 110 was coated, forming double-sided regions, without any single-sided region.

Two separators were used to wrap the negative electrode plate 120 and the positive electrode plate 110. The positive and negative electrode plates were simultaneously wound. During termination, the negative electrode terminating section (including the separators) wrapped a positive electrode, with the separators slightly longer than the positive electrode.

After the electrode assembly was placed in the accommodating component, the hot melt adhesive paper on the negative electrode terminating section 123 was activated to be adhesive after electrolyte injection and formation, so as to be adhered to the accommodating component, thereby fixing the electrode assembly in the accommodating component. Thus, in a subsequent drop test, movement of the electrode assembly caused by insufficient adhesion between the electrode assembly and the accommodating component was avoided, and accordingly a series of failures caused by voltage drop, such as micro short circuiting between the positive and negative electrodes and separator shrinkage, were avoided.

### Comparative example:

A negative electrode plate was provided with a double-sided region and a single-sided region through coating.

A positive electrode plate was coated, forming a double-sided region, without any single-sided region.

Two separators were used to wrap the negative electrode plate and the positive electrode plate. The positive and negative electrode plates were simultaneously wound. During termination, the negative electrode terminating section 123 (including the separators) wrapped the positive electrode plate, with the separators slightly longer than the negative electrode plate 120. Ultimately, the separators wrapped the negative electrode terminating section 123 and complete termination with the negative electrode terminating section 123. Hot melt adhesive paper was adhered to a body region of the separator. Dimensions of the adhesive paper could be 30 mm * 45 mm, and the adhesive paper had a thickness of 25 µm. The structure of the adhesive paper is a 15 µm PET (polyethylene terephthalate) substrate with 5 µm adhesive layers provided on both sides. The PET substrate provided hardness for the adhesive paper, and the adhesive layers provided adhesion, thereby ensuring effective adhesion to the accommodating component through activation by hot pressing after formation.

After the electrode assembly was placed in the accommodating component, the hot melt adhesive layers on the separators were activated to be adhesive after electrolyte injection and formation, so as to be adhered to the accommodating component, thereby fixing the electrode assembly in the accommodating component.

Battery cells in Examples 1, 2, 3, and the comparative example were subjected to drop tests.

The drop test for a finished battery cell included the following steps:
the test was performed at a temperature of 20 ± 5°C;
a state of the battery cell was tested with a fixture;
appearance was inspected and photographed before and after the test; and in a test environment at 20 ± 5°C, the battery cell was dropped from a height of 1.5 m onto a metal floor along six surfaces once and four corners once, for a total of eight rounds of testing; where
measurement frequency: voltage and internal resistance were measured at a specification of 1 kHz; measurement was performed after pre-treatment and the test; and the measurement was performed 24 hours after the test; and
determination criteria: no fire, no explosion, no smoke, no electrolyte leakage, and voltage drop being less than 50 mV.

### Drop test data:

| Group | Thickness of insulating layer or hot melt adhesive layer (µm) | Adhesion region with accommodating component | Roughness (µm) | Pass Ratio of drop test |
|---|---|---|---|---|
| Example 1 | 5 | Main body+side | 4.5 | 9/10 |
| Example 2 | 10 | Main body+side | 4.5 | 10/10 |
| Example 3 | 25 | 30 * 45 mm region of main body | 3 | 7/10 |
| Comparative example 1 | 25 | 30 * 45 mm region of main body | 0.6 | 5/10 |

In Example 1, the insulating layer 130 had adhesivity, that was, the insulating layer 130 was the first adhesive layer 131. In the same drop test, a total of 10 rounds were conducted, with 9 rounds passing the test, achieving a pass ratio as high as 90%.

In Example 2, the insulating layer 130 had adhesivity, that is, the insulating layer 130 was the first adhesive layer 131. In the same drop test, the thickness of the insulating layer 130 was increased in comparison with that in Example 1, so a total of 10 rounds were conducted, with all 10 rounds passing the test, achieving a pass ratio as high as 100%. Therefore, the thickness of the insulating layer 130 can be adjusted as needed to balance the energy density of the battery cell and the pass ratio of the drop test.

In Example 3, the insulating layer 130 included an insulating layer body 132 and a second adhesive layer 133. In the same drop test, a total of 10 rounds were conducted, with 7 rounds passing the test, achieving a pass ratio as high as 70%.

In the comparative example, the adhesive layer was directly adhesively fixed to the outermost separator of the electrode assembly 100, resulting in insecure adhesion. This was also proved by the pass ratio of the drop test. In the same drop test, a total of 10 rounds were conducted, with only 5 rounds passing the test, achieving a pass ratio as low as 50%.

From the above drop test data, it can be learned that no matter the insulating layer 130 provided on the negative electrode terminating section 123 in this application is the first adhesive layer 131 with adhesion performance (Example 1 and Example 2) or includes an insulating layer body 132 and a second adhesive layer 133 (Example 3), since the adhesive layer is directly provided on the negative electrode terminating section 123, the connection stability between the electrode assembly 100 and the accommodating component is improved while the negative electrode terminating section 123 and the accommodating component are separated. The electrode assembly 100 can be more stably fixed in the accommodating component, and the pass ratio of the drop test is much higher than that of Comparative example 1 in which the adhesive layer is provided on the separator.

The following describes in detail a battery cell according to an embodiment of this application.

The battery cell includes an electrode assembly 100 and an accommodating component for accommodating the electrode assembly. The electrode assembly 100 includes a positive electrode plate 110 and a negative electrode plate 120, where the electrode assembly 100 is terminated by the negative electrode plate 120, and an outer side surface of a negative electrode terminating section 123 is provided with an insulating layer 130 with adhesion performance, such that the electrode assembly 100 is adhesively fixed to the accommodating component by the insulating layer 130. The negative electrode terminating section 123 is provided with an active substance on only one side, and the insulating layer 130 is provided on a single-sided region of the negative electrode terminating section 123 where no active substance is provided. Alternatively, neither side surface of the negative electrode current collector 101 at the negative electrode terminating section 123 is provided with the negative electrode active substance 102, and the insulating layer 130 is provided on an uncoated foil region of the negative electrode terminating section 123.

The first adhesive layer 131 has a thickness denoted as t1, and t1 satisfies: 1 µm ≤ t1 ≤ 10 µm. The first adhesive layer 131 has a roughness denoted as Ra, and Ra satisfies: 1 µm ≤ Ra ≤ 20 µm.

The insulating layer 130 has adhesivity, the insulating layer 130 may be configured as a first adhesive layer 131, and the first adhesive layer 131 may be adhesively fixed to both the negative electrode terminating section 123 and the accommodating component. The insulating layer 130 may alternatively include an insulating layer body 132 and a second adhesive layer 133. The insulating layer body 132 is provided on the terminating section of the negative electrode plate 120, and the second adhesive layer 133 is provided on the insulating layer body 132 and is adhesively fixed to the accommodating component. The second adhesive layer 133 may be configured as hot melt adhesive paper attached to the insulating layer body 132. The hot melt adhesive paper has a length of 45 mm to 70 mm and a width of 30 mm to 40 mm. The hot melt adhesive paper has a thickness of 10 µm to 25 µm.

The first adhesive layer 131 and the second adhesive layer 133 may have same compositions. The compositions of the first adhesive layer 131 and the second adhesive layer 133 may include polyolefin and at least one of polyurethane or polyamide.

The positive electrode plate 110 includes a positive electrode starting section 111, a positive electrode middle section 112, and a positive electrode terminating section 113 sequentially connected in a winding direction; and the negative electrode plate 120 includes a negative electrode starting section 121, a negative electrode middle section 122, and a negative electrode terminating section 123 sequentially connected in the winding direction. The positive electrode starting section 111 includes a first straight section 111a, a first bent section 111b, and a second straight section 111c sequentially connected in the winding direction; and the negative electrode starting section 121 includes a third straight section 121a, a second bent section 121b, and a fourth straight section 121c sequentially connected in the winding direction. A free end of the first straight section 111a faces an inner side surface of the second bent section 121b, and a free end of the third straight section 121a faces an inner side surface of the first bent section 111b.

The positive electrode starting section 111, the positive electrode middle section 112, and the positive electrode terminating section 113 are each provided with positive electrode active substances on both two side surfaces in a thickness direction. The negative electrode starting section 121 and the negative electrode middle section 122 are each provided with negative electrode active substances 102 on both two side surfaces in a thickness direction. An inner side surface of the negative electrode terminating section 123 is provided with the negative electrode active substance 102, and an outer side surface of the negative electrode terminating section 123 is not provided with the negative electrode active substance 102.

The battery cell is configured as a pouch cell, and the accommodating component is configured as an aluminum-plastic film bag. After the electrode assembly 100 is immersed in an electrolyte and after formation of the battery cell, the adhesivity of the insulating layer 130 is activated for adhesively fixing the electrode assembly 100 to the accommodating component. After electrolyte injection and formation of the battery cell, the adhesion strength between the insulating layer 130 and the accommodating component is not less than 25 N/m.

The following briefly describes an electric device according to an embodiment of this application.

An embodiment of this application provides an electric device using the foregoing battery cell as a power source. The electric device may be but is not limited to a mobile phone, a tablet computer, a laptop computer, an electric toy, an electric tool, an electric bicycle, an electric motorcycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

The electric device according to some embodiments of this application may include the battery cell in the foregoing embodiments. Since the electric device in some embodiments of this application is provided with the foregoing battery cell, the endurance of the electric device is improved, and thus the use experience of users in using the electric device is improved.

It should be noted and understood that there can be improvements and modifications made of the present invention described in detail above without departing from the scope of the invention as set forth in the accompanying claims.

## Claims

1. A battery cell, comprising:
an electrode assembly (100), wherein the electrode assembly (100) is configured as a wound structure; and
an accommodating component, wherein an installation space for accommodating the electrode assembly (100) is provided in the accommodating component; wherein
the electrode assembly (100) comprises a positive electrode plate (110) and a negative electrode plate (120); and the negative electrode plate (120) comprises a negative electrode terminating section (123), the negative electrode terminating section (123) being disposed at an outermost circle of the electrode assembly (100), an insulating layer (130) being provided on an outer side surface of the negative electrode terminating section (123), and the insulating layer (130) being adhesively fixed to the accommodating component, wherein the positive electrode plate (110) comprises a positive electrode starting section (111), a positive electrode middle section (112), and a positive electrode terminating section (113) sequentially connected in a winding direction; and the negative electrode plate (120) comprises a negative electrode starting section (121), a negative electrode middle section (122), and the negative electrode terminating section (123) sequentially connected in the winding direction;
wherein the positive electrode starting section (111) comprises a first straight section (111a), a first bent section (111b), and a second straight section (111c) sequentially connected in the winding direction; and the negative electrode starting section (121) comprises a third straight section (121a), a second bent section (121b), and a fourth straight section (121c) sequentially connected in the winding direction; **characterised in that** a free end of the first straight section (111a) faces an inner side surface of the second bent section (121b), and a free end of the third straight section (121a) faces an inner side surface of the first bent section (111b),
and **in that** the insulating layer (130) is a first adhesive layer (131) adhesively fixed to the accommodating component wherein the first adhesive layer (131) has a thickness t1, and 1 µm ≤ t1 ≤ 10 µm.

2. The battery cell according to claim 1, wherein at least a portion of the negative electrode terminating section (123) is a single-side coated region or an uncoated foil region, and the insulating layer (130) is disposed on the single-side coated region or the uncoated foil region.

3. The battery cell according to claim 1, wherein 3 µm ≤ t1 ≤ 8 µm.

4. The battery cell according to claim 1, wherein the first adhesive layer (131) has a roughness Ra, and 1 µm ≤ Ra ≤ 20 µm.

5. The battery cell according to claim 4, wherein Ra 5 µm ≤ Ra ≤ 7 µm.

6. The battery cell according to claim 1, wherein the first adhesive layer (131) comprises polyolefin, and at least one of polyurethane or polyamide.

7. The battery cell according to claim 1 or 2, wherein the insulating layer (130) comprises an insulating layer body (132) and a second adhesive layer (133), wherein the insulating layer body (132) is disposed on the negative electrode terminating section (123), and the second adhesive layer (133) is disposed on the insulating layer body (132) and is adhesively fixed to the accommodating component.

8. The battery cell according to claim 7, wherein the second adhesive layer (133) is a hot melt adhesive paper attached to the insulating layer body (132).

9. The battery cell according to claim 8, wherein the second adhesive layer (133) satisfies at least one of the following conditions:
a. the hot melt adhesive paper has a length of 45 mm to 70 mm and a width of 30 mm to 40 mm;
b. the hot melt adhesive paper has a thickness of 10 µm to 25 µm; or
c. the second adhesive layer (133) comprises polyolefin and at least one of polyurethane or polyamide.

10. The battery cell according to claim 1, wherein the positive electrode starting section (111), the positive electrode middle section (112), and the positive electrode terminating section (113) are each provided with positive electrode active substances on both two side surfaces in a thickness direction of the positive electrode plate (110); the negative electrode starting section (121) and the negative electrode middle section (122) are each provided with negative electrode active substances on both side surfaces in a thickness direction of the negative electrode plate; an inner side surface of the negative electrode terminating section (123) is provided with the negative electrode active substance; and an outer side surface of the negative electrode terminating section (123) is not provided with the negative electrode active substance.

11. The battery cell according to claim 1 or 2, wherein the battery cell is a pouch cell, and the accommodating component is an aluminum-plastic film bag.

12. The battery cell according to claim 1, wherein after the electrode assembly (100) is immersed in an electrolyte and after formation of the battery cell, adhesivity of the insulating layer (130) is activated for adhesively fixing the electrode assembly (100) to the accommodating component.

13. The battery cell according to claim 12, wherein an adhesion strength between the insulating layer (130) and the accommodating component is not less than 25 N/m.

14. An electric device, comprising the battery cell according to any one of claims 1 to 13.

## Patentansprüche

1. Batteriezelle, umfassend:
eine Elektrodenanordnung (100), wobei die Elektrodenanordnung (100) als gewickelte Struktur ausgebildet ist; und
ein Aufnahmebauteil, wobei in dem Aufnahmebauteil ein Einbauraum zur Aufnahme der Elektrodenanordnung (100) vorgesehen ist; wobei
die Elektrodenanordnung (100) eine positive Elektrodenplatte (110) und eine negative Elektrodenplatte (120) umfasst; und die negative Elektrodenplatte (120) einen Endabschnitt der negativen Elektrode (123) umfasst, wobei der Endabschnitt der negativen Elektrode (123) an einem äußersten Kreis der Elektrodenanordnung (100) angeordnet ist, eine Isolierschicht (130) auf einer äußeren Seitenfläche des Endabschnitts der negativen Elektrode (123) vorgesehen ist und die Isolierschicht (130) mit dem Aufnahmebauteil verklebt ist, wobei die positive Elektrodenplatte (110) einen Anfangsabschnitt der positiven Elektrode (111), einen Mittelabschnitt der positiven Elektrode (112) und einen Endabschnitt der positiven Elektrode (113) umfasst, die in einer Wickelrichtung nacheinander verbunden sind; und die negative Elektrodenplatte (120) einen Anfangsabschnitt der negativen Elektrode (121), einen Mittelabschnitt der negativen Elektrode (122) und den Endabschnitt der negativen Elektrode (123) umfasst, die in der Wickelrichtung nacheinander verbunden sind;
wobei der Anfangsabschnitt der positiven Elektrode (111) einen ersten geraden Abschnitt (111a), einen ersten gebogenen Abschnitt (111b) und einen zweiten geraden Abschnitt (111c) umfasst, die in der Wickelrichtung nacheinander verbunden sind; und der Anfangsabschnitt der negativen Elektrode (121) einen dritten geraden Abschnitt (121a), einen zweiten gebogenen Abschnitt (121b) und einen vierten geraden Abschnitt (121c) umfasst, die in der Wickelrichtung nacheinander verbunden sind;
**dadurch gekennzeichnet, dass** ein freies Ende des ersten geraden Abschnitts (111a) einer inneren Seitenfläche des zweiten gebogenen Abschnitts (121b) zugewandt ist und ein freies Ende des dritten geraden Abschnitts (121a) einer inneren Seitenfläche des ersten gebogenen Abschnitts (111b) zugewandt ist,
und dass die Isolierschicht (130) eine erste Klebeschicht (131) ist, die mit dem Aufnahmebauteil verklebt ist, wobei die erste Klebeschicht (131) eine Dicke t1 aufweist und 1 µm ≤ t1 ≤ 10 µm gilt.

2. Batteriezelle nach Anspruch 1, wobei mindestens ein Teil des Endabschnitts der negativen Elektrode (123) ein einseitig beschichteter Bereich oder ein unbeschichteter Folienbereich ist und die Isolierschicht (130) auf dem einseitig beschichteten Bereich oder dem unbeschichteten Folienbereich angeordnet ist.

3. Batteriezelle nach Anspruch 1, wobei 3 µm ≤ t1 ≤ 8 µm gilt.

4. Batteriezelle nach Anspruch 1, wobei die erste Klebeschicht (131) eine Rauheit Ra aufweist und 1 µm ≤ Ra ≤ 20 µm gilt.

5. Batteriezelle nach Anspruch 4, wobei Ra 5 µm ≤ Ra ≤ 7 µm gilt.

6. Batteriezelle nach Anspruch 1, wobei die erste Klebeschicht (131) Polyolefin und mindestens eines von Polyurethan oder Polyamid umfasst.

7. Batteriezelle nach Anspruch 1 oder 2, wobei die Isolierschicht (130) einen Isolierschichtkörper (132) und eine zweite Klebeschicht (133) umfasst, wobei der Isolierschichtkörper (132) auf dem Endabschnitt der negativen Elektrode (123) angeordnet ist und die zweite Klebeschicht (133) auf dem Isolierschichtkörper (132) angeordnet und mit dem Aufnahmebauteil verklebt ist.

8. Batteriezelle nach Anspruch 7, wobei die zweite Klebeschicht (133) ein auf den Isolierschichtkörper (132) aufgebrachtes Schmelzklebepapier ist.

9. Batteriezelle nach Anspruch 8, wobei die zweite Klebeschicht (133) mindestens eine der folgenden Bedingungen erfüllt:
a. das Schmelzklebepapier weist eine Länge von 45 mm bis 70 mm und eine Breite von 30 mm bis 40 mm auf;
b. das Schmelzklebepapier weist eine Dicke von 10 µm bis 25 µm auf; oder
c. die zweite Klebeschicht (133) umfasst Polyolefin und mindestens eines von Polyurethan oder Polyamid.

10. Batteriezelle nach Anspruch 1, wobei der Anfangsabschnitt der positiven Elektrode (111), der Mittelabschnitt der positiven Elektrode (112) und der Endabschnitt der positiven Elektrode (113) jeweils auf beiden Seitenflächen in einer Dickenrichtung der positiven Elektrodenplatte (110) mit aktiven Substanzen für die positive Elektrode versehen sind; der Anfangsabschnitt der negativen Elektrode (121) und der Mittelabschnitt der negativen Elektrode (122) jeweils auf beiden Seitenflächen in einer Dickenrichtung der negativen Elektrodenplatte mit aktiven Substanzen für die negative Elektrode versehen sind; eine innere Seitenfläche des Endabschnitts der negativen Elektrode (123) mit der aktiven Substanz für die negative Elektrode versehen ist; und eine äußere Seitenfläche des Endabschnitts der negativen Elektrode (123) nicht mit der aktiven Substanz für die negative Elektrode versehen ist.

11. Batteriezelle nach Anspruch 1 oder 2, wobei die Batteriezelle eine Pouch-Zelle ist und das Aufnahmebauteil ein Aluminium-Kunststoff-Folienbeutel ist.

12. Batteriezelle nach Anspruch 1, wobei nach dem Eintauchen der Elektrodenanordnung (100) in einen Elektrolyten und nach der Formierung der Batteriezelle die Haftfähigkeit der Isolierschicht (130) aktiviert wird, um die Elektrodenanordnung (100) klebend an dem Aufnahmebauteil zu befestigen.

13. Batteriezelle nach Anspruch 12, wobei eine Haftfestigkeit zwischen der Isolierschicht (130) und dem Aufnahmebauteil nicht weniger als 25 N/m beträgt.

14. Elektrische Vorrichtung, umfassend die Batteriezelle nach einem der Ansprüche 1 bis 13.

## Revendications

1. Cellule de batterie, comprenant :
un ensemble d'électrodes (100), l'ensemble d'électrodes (100) étant configuré sous la forme d'une structure enroulée ; et
un composant d'accueil, un espace d'installation destiné à recevoir l'ensemble d'électrodes (100) étant prévu dans le composant d'accueil ; dans laquelle
l'ensemble d'électrodes (100) comprend une plaque d'électrode positive (110) et une plaque d'électrode négative (120) ; et la plaque d'électrode négative (120) comprend une section terminale de l'électrode négative (123), la section terminale de l'électrode négative (123) étant disposée sur un cercle le plus extérieur de l'ensemble d'électrodes (100), une couche isolante (130) étant prévue sur une surface latérale extérieure de la section terminale de l'électrode négative (123), et la couche isolante (130) étant fixée par collage au composant d'accueil, dans laquelle la plaque d'électrode positive (110) comprend une section de départ de l'électrode positive (111), une section centrale de l'électrode positive (112) et une section terminale de l'électrode positive (113) connectées séquentiellement dans un sens d'enroulement ; et la plaque d'électrode négative (120) comprend une section de départ de l'électrode négative (121), une section centrale de l'électrode négative (122) et la section terminale de l'électrode négative (123) connectées séquentiellement dans le sens d'enroulement ;
dans laquelle la section de départ de l'électrode positive (111) comprend une première section droite (111a), une première section coudée (111b) et une deuxième section droite (111c) connectées séquentiellement dans le sens d'enroulement ; et la section de départ de l'électrode négative (121) comprend une troisième section droite (121a), une deuxième section coudée (121b) et une quatrième section droite (121c) connectées séquentiellement dans le sens d'enroulement ;
**caractérisée en ce qu'**une extrémité libre de la première section droite (111a) fait face à une surface latérale intérieure de la deuxième section coudée (121b), et une extrémité libre de la troisième section droite (121a) fait face à une surface latérale intérieure de la première section coudée (111b),
et **en ce que** la couche isolante (130) est une première couche adhésive (131) fixée par collage au composant d'accueil, la première couche adhésive (131) ayant une épaisseur t1, et 1 µm ≤ t1 ≤ 10 µm.

2. Cellule de batterie selon la revendication 1, dans laquelle au moins une partie de la section terminale de l'électrode négative (123) est une région revêtue sur une seule face ou une région de feuille non revêtue, et la couche isolante (130) est disposée sur la région revêtue sur une seule face ou sur la région de feuille non revêtue.

3. Cellule de batterie selon la revendication 1, dans laquelle 3 µm ≤ t1 ≤ 8 µm.

4. Cellule de batterie selon la revendication 1, dans laquelle la première couche adhésive (131) a une rugosité Ra, et 1 µm ≤ Ra ≤ 20 µm.

5. Cellule de batterie selon la revendication 4, dans laquelle Ra 5 µm ≤ Ra ≤ 7 µm.

6. Cellule de batterie selon la revendication 1, dans laquelle la première couche adhésive (131) comprend une polyoléfine et au moins l'un parmi un polyuréthane ou un polyamide.

7. Cellule de batterie selon la revendication 1 ou 2, dans laquelle la couche isolante (130) comprend un corps de couche isolante (132) et une deuxième couche adhésive (133), le corps de couche isolante (132) étant disposé sur la section terminale de l'électrode négative (123), et la deuxième couche adhésive (133) étant disposée sur le corps de couche isolante (132) et fixée par collage au composant d'accueil.

8. Cellule de batterie selon la revendication 7, dans laquelle la deuxième couche adhésive (133) est un papier adhésif thermofusible fixé au le corps de couche isolante (132).

9. Cellule de batterie selon la revendication 8, dans laquelle la deuxième couche adhésive (133) satisfait à au moins l'une des conditions suivantes :
a. le papier adhésif thermofusible a une longueur de 45 mm à 70 mm et une largeur de 30 mm à 40 mm ;
b. le papier adhésif thermofusible a une épaisseur de 10 µm à 25 µm ; ou
c. la deuxième couche adhésive (133) comprend de la polyoléfine et au moins l'un parmi un polyuréthane ou un polyamide.

10. Cellule de batterie selon la revendication 1, dans laquelle la section de départ de l'électrode positive (111), la section centrale de l'électrode positive (112) et la section terminale de l'électrode positive (113) sont chacune munies de substances actives d'électrode positive sur leurs deux surfaces latérales dans une direction d'épaisseur de la plaque d'électrode positive (110) ; la section de départ de l'électrode négative (121) et la section centrale de l'électrode négative (122) sont chacune munies de substances actives d'électrode négative sur leurs deux surfaces latérales dans une direction d'épaisseur de la plaque d'électrode négative ; une surface latérale intérieure de la section terminale de l'électrode négative (123) est munie de la substance active d'électrode négative ; et une surface latérale extérieure de la section terminale de l'électrode négative (123) n'est pas munie de la substance active d'électrode négative.

11. Cellule de batterie selon la revendication 1 ou 2, dans laquelle la cellule de batterie est une cellule à poche, et le composant d'accueil est une poche en film aluminiumplastique.

12. Cellule de batterie selon la revendication 1, dans laquelle, après immersion de l'ensemble d'électrodes (100) dans un électrolyte et après formation de la cellule de batterie, l'adhésivité de la couche isolante (130) est activée pour fixer par collage l'ensemble d'électrodes (100) au composant d'accueil.

13. Cellule de batterie selon la revendication 12, dans laquelle une force d'adhérence entre la couche isolante (130) et le composant d'accueil n'est pas inférieure à 25 N/m.

14. Dispositif électrique, comprenant la cellule de batterie selon l'une quelconque des revendications 1 à 13.
